# EUROPEAN PATENT APPLICATION

(11) **EP 3 974 560 A1**
(43) Date of publication of application: **30.03.2022**
(21) Application number: 20198419.2
(22) Date of filing: 25.09.2020
(51) Int. Cl.: C25B 9/17, C25B 11/02

(54) **REACTOR FOR ELECTROCHEMICAL SYNTHESIS**

(71) Applicant: BASF SE, 67056 Ludwigshafen am Rhein (DE)
(72) Inventor: The designation of the inventor has not yet been filed
(74) Representative: BASF IP Association

(57) **Abstract**

A reactor (100) for electrochemical synthesis is proposed. The reactor (100) comprises a vessel (102) configured to receive a reaction mixture comprising an electrolytic medium and at least one reactant, at least a first electrode (108), and at least a second electrode (110). The first electrode (108) and the second electrode (110) are arranged within the vessel (102) and inter-penetrate one another. Further, a method for carrying out an electrochemical synthesis is proposed.

## Description

### Technical Field

The invention relates to a reactor for electrochemical synthesis. Moreover, the invention relates to a method for carrying out electrochemical synthesis. The method and the computer system may be used for organic or inorganic electrosynthesis on the technical field of chemistry. Other applications are possible.

### Background art

Electrochemical synthesis or electrosynthesis in chemistry is the synthesis of chemical compounds in an electrochemical cell. Compared to ordinary redox reaction, electrosynthesis sometimes offers improved selectivity and yields. Electrosynthesis is actively studied as a science and also has industrial applications. Electro-oxidation has potential for wastewater treatment as well.

The basic setup in electrosynthesis is a galvanic cell, an electric power source and at least two electrodes. Typical solvent and electrolyte combinations minimizes electrical resistance. Protic conditions often use alcohol-water or dioxane-water solvent mixtures with an electrolyte such as a soluble salt, acid or base. Aprotic conditions often use an organic solvent such as acetonitrile or dichloromethane with electrolytes such as lithium perchlorate or tetrabutylammonium salts. The choice of electrodes with respect to their composition and surface area can be decisive. For example, in aqueous conditions the competing reactions in the cell are the formation of oxygen at the anode and hydrogen at the cathode. In this case a graphite anode and lead cathode could be used effectively because of their high overpotentials for oxygen and hydrogen formation respectively. Many other materials can be used as electrodes. Other examples include platinum, magnesium, mercury (as a liquid pool in the reactor), stainless steel or reticulated vitreous carbon. Some reactions use a sacrificial electrode that is consumed during the reaction like zinc, magnesium or aluminium. Cell designs can be undivided cell or divided cell type. In divided cells the cathode and anode chambers are separated with a semiporous membrane. Common membrane materials include sintered glass, porous porcelain, polytetrafluoroethene or polypropylene. The purpose of the divided cell is to permit the diffusion of ions while restricting the flow of the products and reactants. This separation simplifies workup. An example of a reaction requiring a divided cell is the reduction of nitrobenzene to phenylhydroxylamine, where the latter chemical is susceptible to oxidation at the anode.

Organic oxidations take place at the anode. Compounds are reduced at the cathode. Radical intermediates are often invoked. The initial reaction takes place at the surface of the electrode and then the intermediates diffuse into the solution where they participate in secondary reactions.

The yield of an electrosynthesis is expressed both in terms the chemical yield and current efficiency. Current efficiency is the ratio of Coulombs consumed in forming the products to the total number of Coulombs passed through the cell. Side reactions decrease the current efficiency.

The potential drop between the electrodes determines the rate constant of the reaction. Electrosynthesis is carried out with either constant potential or constant current. The reason one chooses one over the other is due to a trade off of ease of experimental conditions versus current efficiency. Constant potential uses current more efficiently because the current in the cell decreases with time due to the depletion of the substrate around the working electrode. This is not the case under constant current conditions however. Instead as the substrate's concentration decreases the potential across the cell increases in order to maintain the fixed reaction rate. This consumes current inside reactions produced outside the target voltage.

Many reactors used for electrochemical synthesis comprise plate-shaped electrodes which are arranged as cathodes and anodes in an alternating manner one above the other with a gap therebetween. The reaction mixture is supplied through a central inlet and flows through the gap between the electrodes where the reaction takes place by applying a voltage to the electrodes.

Despite the achievements so far, there is still a need for enhanced reactors for electrochemical synthesis. The space time yield (STY) of most state of the art electrochemical reactors is so low that the resulting high investment costs for those unfavourable electrochemical reactors frequently destroy the business case of a potential process involving electrosynthesis. The resulting problem is that electrosynthesis processes which could be beneficial are not build due to the large required invest. A further problem of state of the art electrochemical reactors is the occurrence of unwanted deposits on the electrode surface. These deposits are partly caused by an unfavourable electrolyte flow through the reactor, which is dictated by its current design, and second by a high current density which is typically applied to counteract the low surface area of current electrochemical reactors in order to maximize the STY.

### Problem to be solved

It is therefore desirable to provide methods and devices which address the above-mentioned technical challenges. Specifically, devices and methods for electrochemical synthesis shall be provided which allow to increase the overall space time yield (STY) of electrochemical reactors.

### Summary

This problem is addressed by a reactor and a method with the features of the independent claims. Advantageous embodiments which might be realized in an isolated fashion or in any arbitrary combinations are listed in the dependent claims.

In a first aspect of the present invention, a reactor for electrochemical synthesis is proposed.

The term "electrochemical synthesis" as used herein is a broad term and is to be given its ordinary and customary meaning to a person of ordinary skill in the art and is not to be limited to a special or customized meaning. The term specifically may refer, without limitation, to the synthesis of chemical compounds in an electrochemical cell. It is a process which enforces targeted chemical reactions by electric current and thus generates the desired intermediate or end products. Non limiting examples of such products are medicinal agents such as analgesics, disinfectants, and synthetic rubber materials such as nitrile and many more. Particularly characteristic of electro-organic synthesis is the electric current. Targeted electro-organic syntheses can be used to shorten conventional reactions. This reduces the use of raw materials such as catalysts, and can thus prevent the side-effects of drugs and environmental pollution. It also saves energy, time, and money. Particularly, the term "electrochemical synthesis" may cover organic electrochemical synthesis, where organic products are synthesized, and inorganic electrochemical synthesis, where inorganic product are synthesized.

The reactor comprises a vessel configured to receive a reaction mixture comprising an electrolytic medium and at least one reactant.

The term "vessel" as used herein is a broad term and is to be given its ordinary and customary meaning to a person of ordinary skill in the art and is not to be limited to a special or customized meaning. The term specifically may refer, without limitation, to any constructional member or device configured to serve as a galvanic cell and configured to receive a reaction mixture.

The term "reaction mixture" as used herein is a broad term and is to be given its ordinary and customary meaning to a person of ordinary skill in the art and is not to be limited to a special or customized meaning. The term specifically may refer, without limitation, to any fluid comprising at least one component, which is the so-called reactant, intended to be involved in an electrochemical reaction. The reaction mixture may be a mixture of several chemical components intended to be involved in an electrochemical reaction. The fluid may be a liquid, a gas or a mixture thereof.

The term "electrolytic medium" as used herein is a broad term and is to be given its ordinary and customary meaning to a person of ordinary skill in the art and is not to be limited to a special or customized meaning. The term specifically may refer, without limitation, to any fluid having electrolytic characteristics. The fluid may be a liquid, a gas or a mixture thereof. An electrolyte is a substance that produces an electrically conducting solution when dissolved in a polar solvent, such as water. The dissolved electrolyte separates into cations and anions, which disperse uniformly through the solvent. Electrically, such a solution is neutral. If an electric potential is applied to such a solution, the cations of the solution are drawn to the electrode that has an abundance of electrons, while the anions are drawn to the electrode that has a deficit of electrons. The movement of anions and cations in opposite directions within the solution amounts to a current. This includes most soluble salts, acids, and bases. Some gases, such as hydrogen chloride, under conditions of high temperature or low pressure can also function as electrolytes. Electrolyte solutions can also result from the dissolution of some biological (e.g., DNA, polypeptides) and synthetic polymers (e.g., polystyrene sulfonate), termed "polyelectrolytes", which contain charged functional groups. A substance that dissociates into ions in solution acquires the capacity to conduct electricity. Sodium, potassium, chloride, calcium, magnesium, and phosphate are examples of electrolytes.

The term "reactant" as used herein is a broad term and is to be given its ordinary and customary meaning to a person of ordinary skill in the art and is not to be limited to a special or customized meaning. The term specifically may refer, without limitation, to a chemical component intended to react to a product such as an intermediate or final product in an electrochemical reaction. With other words, a reactant may be a substance or compound added to a system such as the reaction mixture and which is consumed in the course of a chemical reaction. Solvents, though involved in the reaction, are usually not called reactants. Similarly, catalysts are not consumed by the reaction, so they are not reactants.

The reactor further comprises at least a first electrode and at least a second electrode. The first electrode and the second electrode are arranged within the vessel and interpenetrate one another.

The term "electrode" as used herein is a broad term and is to be given its ordinary and customary meaning to a person of ordinary skill in the art and is not to be limited to a special or customized meaning. The term specifically may refer, without limitation, to an electrical conductor through which a current may flow. An electrode in an electrochemical cell is referred to as either an anode or a cathode. The anode is defined as the electrode at which electrons leave the cell and oxidation occurs (indicated by a plus symbol, "+"), and the cathode as the electrode at which electrons enter the cell and reduction occurs (indicated by a minus symbol, "-"). Each electrode may become either the anode or the cathode depending on the direction of current through the cell.

The term "interpenetrate" as used herein is a broad term and is to be given its ordinary and customary meaning to a person of ordinary skill in the art and is not to be limited to a special or customized meaning. The term specifically may refer, without limitation, to an arrangement of at least two constructional members that penetrate each other or one another mutually without contacting, particularly physically contacting, one another. Thus, in the present case, the first and second electrodes penetrate each other or one another mutually without being in electrical contact.

The first electrode and the second electrode may be electrically insulated from one another. This can be realized in that the electrodes are spatially separated. Needless to say, the electrodes may be engaged or contacted by stabilizers or spacers, which however are not electrically conductive so as to avoid a short circuit.

The first electrode and the second electrode may be arranged so as to allow a flow of the reaction mixture therebetween.

The term "allow a flow" as used herein is a broad term and is to be given its ordinary and customary meaning to a person of ordinary skill in the art and is not to be limited to a special or customized meaning. The term specifically may refer, without limitation, to an arrangement of the electrodes in that the reaction mixture may flow within and through a space formed between the interpenetrating electrodes. Thus, a contact of the reaction mixture with the electrodes is ensured so as to initiate the electrosynthesis.

The first electrode and the second electrode may be arranged so as to direct a flow of the reaction mixture through the vessel.

The term "direct a flow" as used herein is a broad term and is to be given its ordinary and customary meaning to a person of ordinary skill in the art and is not to be limited to a special or customized meaning. The term specifically may refer, without limitation, to an arrangement of the electrodes in that the reaction mixture is guided in one or more predetermined directions through the vessel and through a space formed between the interpenetrating electrodes. Thus, a contact time or duration of the reaction mixture at the electrodes may be controlled so as to control turbulences which influence the influence mass transport that it is beneficial for the electrochemical reaction.

The first electrode and the second electrode may have an identical or different shape. Thus, a broad range of potential designs and shapes of the electrodes is applicable with the present invention.

The first electrode and/or the second electrode may be shaped in a regular or irregular pattern. Thus, the electrodes may be formed by arbitrary portions or periodically identical portions.

The first electrode and/or the second electrode each may comprise a plurality of electrode portions being angled with respect to one another. Particularly, the electrode portions may extend within planes different from one another. The electrode portions may be regularly angled with respect to one another. Particularly, the electrode portions may angled with respect to one another at an angle in a range of 45° to 150°.

The first electrode and/or the second electrode may be two dimensionally or three dimensionally grid-shaped.

The first electrode and/or the second electrode may be honeycomb-shaped.

The first electrode or the second electrode may be comb-shaped. With other words, one of the electrodes may have a shape of a thin row of long, narrow parts along one side.

The first electrode and the second electrode may be made by an additive manufacturing method. For example, the first electrode and the second electrode may be made by 3D-printing.

The term "additive manufacturing method" as used herein is a broad term and is to be given its ordinary and customary meaning to a person of ordinary skill in the art and is not to be limited to a special or customized meaning. The term specifically may refer, without limitation, to the construction of a three-dimensional object from a CAD model or a digital 3D model. The term "3D printing" can refer to a variety of processes in which material is deposited, joined or solidified under computer control to create a three-dimensional object, with material being added together (such as liquid molecules or powder grains being fused together), typically layer by layer. Fused deposition modeling, or FDM, and selective ion beam melting, SIBM, are examples for a common 3D printing process in use.

The first electrode and/or the second electrode may be made at least partially of a material comprising metal. The material of the first electrode and/or the second electrode may comprise at least one metal selected from the group consisting of Pt, Ta, Ni, Au, Fe, Ag, Al, Ti, Cu, any mixture and oxides thereof. Thus, the material of the first electrode and/or the second electrode may be steel, particularly, stainless steel, an alloy, particularly a Ni based alloy, a NiCu alloy and Bronze. The alloy may comprise metal alloy additives such as Cr, Co, Mg, V, Nb, Mo, Ti. Particular alloys applicable with the present disclosure are TiAl6V4, NiCr19NbMo or NiCr19NbMo. In addition or alternatively, the alloy may comprise non-metal alloy additives such as carbon.

Preferably, the first electrode and/or the second electrode is made of steel, tool steel, high-grade steel such as 1.4404 according to EN 10027-2:1992-09, a Ni based alloy such as NiCr19NbMo or NiCu30Fe , brass having Zn up to 40% Zink, bronze having more than 60% Cu but without Zn, a NiAl alloy.

Alternatively, the first electrode and/or the second electrode may be made at least partially of a material comprising plastics and/or polymer. Basically, all plastic or polymer materials are usable which are suitable to form a filament for an additive manufacturing method such as 3D printing and having electrically conductive characteristics. The electrically conductive characteristics can be realized by electrically conductive additives such as carbon or graphite. Further, all plastic materials can be used that can be provided with a coating having electrically conductive characteristics.

Preferably, the first electrode and/or the second electrode is made of at least one plastic material selected from the group consisting of PLA (Polylactic Acid), ABS (Acrylonitrile butadiene), and ABS as basis for a coating, particularly a coating made of Ni.

At least an outer surface layer of the first electrode and/or the second electrode comprises a material comprising at least one element selected from the group consisting of Pt, Pd, Ru, Ir, Ta, Ni, Ni-oxides (incl. NiOOH), Au, Fe, Cr, Ag, Al, Ti, Mg, Mo, W, Cu, Sn , Zn, Cd, Pb, Pb-oxides, carbon allotropes (doped diamond, boron-doped diamond, glassy carbon, graphite, carbon nanotubes), gas diffusion layers, any mixture such as an alloy and oxides thereof.

Preferably, the outer surface layer is made of Pt, Pd, Ru such as Ru composites, Ni, Ni-oxides (incl. NiOOH), Au, Ag, Al, carbon allotropes (doped diamond, boron-doped diamond, graphite, carbon nanotubes), Pb, Pb-oxides, Cr, Cu, Sn, Zn, Cd.

The outer surface layer may be a coating.

The vessel may comprise a predetermined length, wherein the first electrode and the second electrode each may comprise a length being in a range of 50 % to 99% of the length of the vessel. Thus, a high rate of the conversion of the reactant may be realized.

The vessel may comprise a predetermined width, wherein the first electrode and the second electrode each may comprise a width being in a range of 50 % to 99% of the width of the vessel. Thus, a high rate of the conversion of the reactant may be realized.

The vessel may comprise a substantially cylindrical shape, particularly a cylindrical shape with a circular, oval, elliptical polygonal or polygonal with rounded edges cross-section. Thus, the vessel may be designed in a plurality of different shapes in principle.

The vessel may comprise at least one inlet for supplying the reaction mixture and at least one outlet for discharging the reaction mixture and/or its reaction products. Thus, the reactor may be used with a continuous or batch process.

The reactor may further comprise a pump configured to provide a predetermined flow of the reaction mixture through the vessel. Thus, the reaction mixture may be circulated through the vessel and/or a continuous infeed of the reaction mixture during the electrosynthesis may be realized. Needless to say, the vessel comprises an outlet for discharging of the reaction mixture and/or the resulting final product(s).

The reactor may further comprise a power source configured to apply a voltage or current to the first and second electrodes, wherein the first electrode and the second electrode each may comprise at least one connection point connected to the power source. Thus, the voltage or current may be supplied to the electrodes at one or more connection points.

In another aspect of the present invention, a method for carrying out an electrochemical synthesis is proposed. The method comprises the following steps, which may be performed in the given order. However, a different order may also be possible. Further, one or more than one or even all of the steps may be performed once or repeatedly. Further, the method steps may be performed in a timely overlapping fashion or even in parallel. The method may further comprise additional method steps which are not listed.

The method comprises the following steps:
- providing a reactor according to any preceding claim,
- supplying a reaction mixture comprising an electrolytic medium and at least one reactant to the vessel, and
- applying a predetermined voltage or current to the first electrode and second electrode.

The method may further comprise discharging the reaction mixture and/or its reaction products from the vessel.

The term "discharging the reaction mixture and/or its reaction products" as used herein is a broad term and is to be given its ordinary and customary meaning to a person of ordinary skill in the art and is not to be limited to a special or customized meaning. The term specifically may refer, without limitation, to releasing the reaction mixture and/or its reaction products from the vessel. The reaction mixture and/or its reaction products may be completely or partially released. For example, a continuous release of a predetermined amount the reaction mixture and/or its reaction products may be realized which is replaced by a feed of fresh reaction mixture. Further, the reaction mixture may be circulated through the vessel.

The method may further comprise providing a flow of the reaction mixture through the vessel. Thus, the reaction mixture may be subject to a forced movement through the vessel. The forced movement may be a continuous movement or pulsed movement.

The method may further comprise adapting the voltage or current applied to the first electrode and the second electrode to the type of reactant and/or the type of intended electrochemical reaction. Thus, the rate or velocity of the electrosynthesis may be varied and adjusted to the type of reaction and/or the reactant(s).

The method may further comprise carrying out the method in a continuous or batch manner.

The term "batch manner" as used herein is a broad term and is to be given its ordinary and customary meaning to a person of ordinary skill in the art and is not to be limited to a special or customized meaning. The term specifically may refer, without limitation, to a process where the products are made as specified groups or amounts, within a time frame. A batch can go through a series of steps in a large manufacturing process to make the final desired product. Batch processes are used for many types of manufacturing that may need smaller amounts of production at a time to ensure specific quality standards or changes in the process. This is opposed to large mass production or continuous process methods where the product or process does not need to be checked or changed as frequently or periodically.

Further disclosed and proposed herein is a computer program including computer-executable instructions for performing the method according to the present invention in one or more of the embodiments enclosed herein when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of the method steps as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, non-withstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:
Embodiment 1: Reactor for electrochemical synthesis, comprising
   a vessel configured to receive a reaction mixture comprising an electrolytic medium and at least one reactant,
   at least a first electrode, and
   at least a second electrode,
   wherein the first electrode and the second electrode are arranged within the vessel and interpenetrate one another.
Embodiment 2: Reactor according to the preceding embodiment, wherein the first electrode and the second electrode are electrically insulated from one another.
Embodiment 3: Reactor according to any preceding embodiment, wherein the first electrode and the second electrode are arranged so as to allow a flow of the reaction mixture therebetween.
Embodiment 4: Reactor according to any preceding embodiment, wherein the first electrode and the second electrode are arranged so as to direct a flow of the reaction mixture through the vessel.
Embodiment 5: Reactor according to any preceding embodiment, wherein the first electrode and the second electrode have an identical or different shape.
Embodiment 6: Reactor according to any preceding embodiment, wherein the first electrode and/or the second electrode are shaped in a regular or irregular pattern.
Embodiment 7: Reactor according to any preceding embodiment, wherein the first electrode and/or the second electrode each comprise a plurality of electrode portions being angled with respect to one another.
Embodiment 8: Reactor according to the preceding embodiment, wherein the electrode portions extend within planes different from one another.
Embodiment 9: Reactor according to embodiment 6 or 7, wherein the electrode portions are regularly angled with respect to one another.
Embodiment 10: Reactor according to any one of embodiments 6 to 8, wherein the electrode portions are angled with respect to one another at an angle in a range of 45° to 150°.
Embodiment 11: Reactor according to any preceding embodiment, wherein the first electrode and/or the second electrode are two dimensionally or three dimensionally grid-shaped.
Embodiment 12: Reactor according to any preceding embodiment, wherein the first electrode and/or the second electrode are honeycomb-shaped.
Embodiment 13: Reactor according to any preceding embodiment, wherein the first electrode or the second electrode is comb-shaped.
Embodiment 14: Reactor according to any preceding embodiment, wherein the first electrode and the second electrode are made by an additive manufacturing method, particularly 3D-printing.
Embodiment 15: Reactor according to any preceding embodiment, wherein the first electrode and the second electrode are made at least partially of a material comprising metal, particularly at least one metal selected from the group consisting of Pt, Ta, Ni, Au, Fe, Ag, Al, Ti, Cu, any mixture and oxides thereof, or wherein the first electrode and the second electrode are made at least partially of a material comprising plastics and/or polymer.
Embodiment 16: Reactor according to any preceding embodiment, wherein at least an outer surface layer of the first electrode and/or the second electrode comprises a material comprising at least one element selected from the group consisting of Pt, Pd, Ru, Ir, Ta, Ni, Ni-oxides, Au, Fe, Cr, Ag, Al, Ti, Mg, Mo, W, Cu, Sn , Zn, Cd, Pb, Pb-oxides, carbon allotropes, gas diffusion layers, any mixture and oxides thereof.
Embodiment 17: Reactor according to the preceding embodiment, wherein the outer surface layer is a coating.
Embodiment 18: Reactor according to any preceding embodiment, wherein the vessel comprises a predetermined length, wherein the first electrode and the second electrode each comprise a length being in a range of 50 % to 99% of the length of the vessel.
Embodiment 19: Reactor according to any preceding embodiment, wherein the vessel comprises a predetermined width, wherein the first electrode and the second electrode each comprise a width being in a range of 50 % to 99% of the width of the vessel.
Embodiment 20: Reactor according to any preceding embodiment, wherein the vessel comprises a substantially cylindrical shape, particularly a cylindrical shape with a circular, oval, elliptical polygonal or polygonal with rounded edges cross-section.
Embodiment 21: Reactor according to any preceding embodiment, wherein the vessel comprises at least one inlet for supplying the reaction mixture and at least one outlet for discharging the reaction mixture and/or its reaction products.
Embodiment 22: Reactor according to any preceding embodiment, further comprising a pump configured to provide a predetermined flow of the reaction mixture through the vessel.
Embodiment 23: Reactor according to any preceding embodiment, further comprising a power source configured to apply a voltage or current to the first and second electrode, wherein the first electrode and the second electrode each comprise at least one connection point connected to the power source.
Embodiment 24: Method for carrying out an electrochemical synthesis, comprising
   - providing a reactor according to any preceding embodiment,
   - supplying a reaction mixture comprising an electrolytic medium and at least one reactant to the vessel, and
   - applying a predetermined voltage or current to the first electrode and second electrode.
Embodiment 25: Method according to the preceding embodiment, further comprising discharging the reaction mixture and/or its reaction products from the vessel.
Embodiment 26: Method according to embodiment 24 or 25, further comprising providing a flow of the reaction mixture through the vessel.
Embodiment 27: Method according to any one of embodiments 24 to 26, further comprising adapting the voltage or current applied to the first electrode and the second electrode to the type of reactant and/or the type of intended electrochemical reaction.
Embodiment 28: Method according to any one of embodiments 24 to 27, further comprising carrying out the method in a continuous or batch manner.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a reactor according to the present invention, and
- Figure 2: shows an arrangement of the first and second electrodes.

### Detailed description of the embodiments

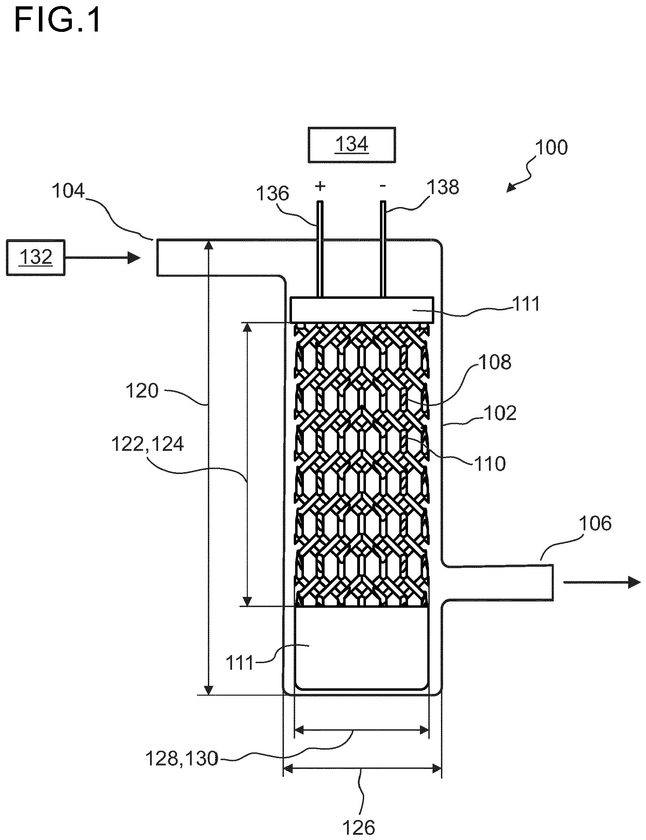

Figure 1 shows a reactor 100 according to the present invention. The reactor 100 comprises a vessel 102 configured to receive a reaction mixture comprising an electrolytic medium and at least one reactant. The vessel 102 comprises a substantially cylindrical shape with a circular cross-section. For clarity reasons, a part of the cylindrical vessel wall defining the vessel interior is not illustrated. Particularly, the vessel 102 comprises at least one inlet 104 for supplying the reaction mixture and at least one outlet 106 for discharging the reaction mixture and/or its reaction products. The inlet 104 and the outlet 106 are located at opposite ends of the vessel 102 with respect to a cylinder axis of the cylindrical shape. Needless to say, the inlet 104 and the outlet 106 may be located at the same end of the vessel 102.

The reactor 100 further comprises at least a first electrode 108 and at least a second electrode 110. The first electrode 108 and the second electrode 110 are arranged within the vessel 102. The reactor 100 may further comprise at least one support 111 configured to fix the first electrode 108 and the second electrode 110 at their position within the vessel 102. The support 111 may be provided at one or both ends of the electrodes 108, 11 within the vessel 102. The support 111 may be made from a material being not electrically conductive and being electrically isolating, respectively, such as polytetrafluoroethylene. Further, the first electrode 108 and the second electrode 110 interpenetrate one another. The first electrode 108 and the second electrode 110 are electrically insulated from one another. The first electrode 108 and the second electrode 110 are arranged so as to allow a flow of the reaction mixture therebetween. More particularly, the first electrode 108 and the second electrode 110 are arranged so as to direct a flow of the reaction mixture through the vessel 102.

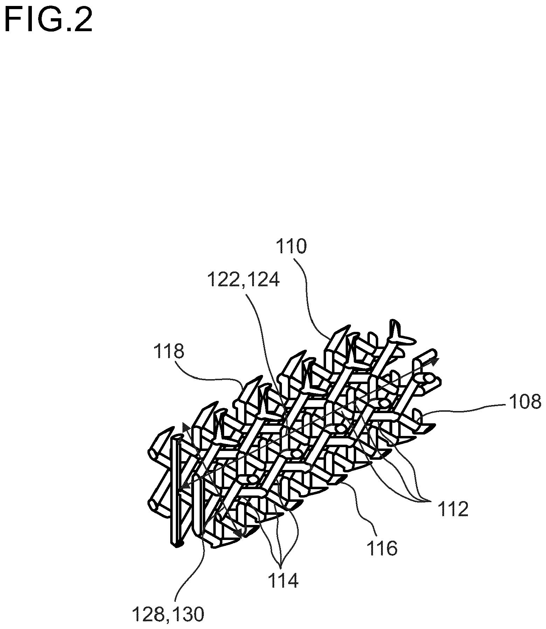

Figure 2 shows an arrangement of the first and second electrodes 108, 110. The first electrode 108 and the second electrode 110 have an identical shape. The first electrode 108 and the second electrode 110 are shaped in a regular pattern. The first electrode 108 comprises a plurality of first electrode portions 112 being angled with respect to one another. The second electrode 110 comprises a plurality of second electrode portions 114 being angled with respect to one another. The electrode portions 112, 114 respectively extend within planes different from one another. The electrode portions 112, 114 are respectively regularly angled with respect to one another. The electrode portions 112, 114 are angled with respect to one another at an angle in a range of 45° to 150° such as 120°. Thus, the first electrode 108 and the second electrode 110 are substantially three dimensionally grid-shaped. Particularly, the first electrode 108 and the second electrode 110 are substantially honeycomb-shaped or comprise honeycomb-shaped portions.

The specific shape of the first electrode 108 and the second electrode 110 respectively as a netting may be realized in that the first electrode 108 and the second electrode 110 are made by an additive manufacturing method such as 3D-printing. Particularly, the first electrode 108 and the second electrode 110 are made at least partially of a material comprising metal. The material of the first electrode 108 and/or the second electrode 110 may comprise at least one metal selected from the group consisting of Pt, Ta, Ni, Au, Fe, Ag, Al, Ti, Cu, any mixture and oxides thereof. Thus, the material of the first electrode 108 and/or the second electrode 110 may be steel, particularly, stainless steel, an alloy, particularly a Ni based alloy, a NiCu alloy and Bronze. The alloy may comprise metal alloy additives such as Cr, Co, Mg, V, Nb, Mo, Ti. Particular alloys applicable with the present disclosure are TiAl6V4, NiCr19NbMo or NiCr19NbMo. In addition, or alternatively, the alloy may comprise non-metal alloy additives such as carbon.

Preferably, the first electrode 108 and/or the second electrode 110 is made of steel, tool steel, high-grade steel such as 1.4404 according to EN 10027-2:1992-09, a Ni based alloy such as NiCr19NbMo, Monel (= 2.4360 Ni based alloy Ni based alloy), a NiCu allo having approximately 65 % Ni, 33 % CU and 2 % Fe, brass having Zn up to 40% Zink, bronze having more than 60% Cu but without Zn, a NiAl alloy.

Alternatively, the first electrode 108 and/or the second electrode 110 may be made at least partially of a material comprising plastics and/or polymer. Basically, all plastic or polymer materials are usable which are suitable to form a filament for an additive manufacturing method such as 3D printing and having electrically conductive characteristics. The electrically conductive characteristics can be realized by electrically conductive additives such as carbon or graphite. Further, all plastic materials can be used that can be provided with a coating having electrically conductive characteristics.

Preferably, the first electrode 108 and/or the second electrode 110 is made of at least one plastic material selected from the group consisting of PLA (Polylactic Acid), ABS (Acrylonitrile butadiene), and ABS as basis for a coating, particularly a coating made of Ni.

At least an outer surface layer 116, 118 of the first electrode 108 and/or the second electrode 110 comprises a material comprising at least one element selected from the group consisting of Pt, Pd, Ru, Ir, Ta, Ni, Ni-oxides (incl. NiOOH), Au, Fe, Cr, Ag, Al, Ti, Mg, Mo, W, Cu, Sn , Zn, Cd, Pb, Pb-oxides, carbon allotropes (doped diamond, boron-doped diamond, glassy carbon, graphite, carbon nanotubes), gas diffusion layers, any mixture such as an alloy and oxides thereof.

Preferably, the outer surface layer 116, 118 is made of Pt, Pd, Ru such as Ru composites, Ni, Ni-oxides (incl. NiOOH), Au, Ag, Al, carbon allotropes (doped diamond, boron-doped diamond, graphite, carbon nanotubes), Pb, Pb-oxides, Cr, Cu, Sn, Zn, Cd.With other words, an outer surface layer 116 of the first electrode 108 comprises a material comprising graphite and/or Nickel. In addition or alternatively, an outer surface layer 118 of the second electrode 110 comprises a material comprising graphite and/or Nickel. The outer surface layer 116, 118 is a coating.

Referring back to Figure 1, the vessel 102 comprises a predetermined length 120. The first electrode 108 and the second electrode 110 each comprise a length 122, 124 being in a range of 50 % to 99% of the length 120 of the vessel 102 such as 85 %. With other words, the first electrode 108 comprises a length 124 being in a range of 50 % to 99% of the length 120 of the vessel 102 and the second electrode 110 comprises a length 124 being in a range of 50 % to 99% of the length 120 of the vessel 102. The vessel 102 comprises a predetermined width 126. The first electrode 108 and the second electrode 110 each comprise a width 128, 130 being in a range of 50 % to 99% of the width 126 of the vessel 102 such as 85 %. With other words, the first electrode 108 comprises a width 128 being in a range of 50 % to 99% of the width 126 of the vessel 102 and the second electrode 110 comprises a width 130 being in a range of 50 % to 99% of the width 126 of the vessel 102.

As is further shown in Figure 1, the reactor 100 further comprises a pump 132 configured to provide a predetermined flow of the reaction mixture through the vessel 102. The reactor 100 further comprises a power source 134 configured to apply a voltage or current to the first and second electrodes 108, 110. For this purpose, the first electrode 108 and the second electrode 110 each comprise at least connection point 136, 138 connected to the power source 134. With other words, the first electrode 108 comprises a connection point 136 connected to the power source 134 and the second electrode comprises a connection point 138 connected to the power source 134. The first electrode 108, 108 are supplied with current or voltage such that the first electrode 108 operates as anode and the second electrode 110 operates as cathode.

The reactor 100 may be modified as follows. The first electrode 108 and the second electrode 110 may have a different shape. The first electrode 108 and/or the second electrode 110 may be shaped in an irregular pattern. The first electrode 108 and/or the second electrode 110 may be two dimensionally grid-shaped. The first electrode 108 or the second electrode 110 may be comb-shaped. The vessel 102 may have a cylindrical shape with an oval, elliptical polygonal or polygonal with rounded edges cross-section.

The operation and method for carrying out an electrochemical synthesis will be explained in further detail hereinafter. The reactor 100 as described above is provided. A reaction mixture comprising an electrolytic medium and at least one reactant is supplied to the vessel 102 via the inlet 104. A flow of the reaction mixture through the vessel 102 is provided by means of the pump 132. The reaction mixture may be circulated through the vessel 102. The flow may be continuous or in a pulsed manner. Further, a predetermined voltage or current is applied to the first electrode 108 and second electrode 110 by means of the power source 134. The voltage or current applied to the first electrode 108 and the second electrode 110 is adapted to the type of reactant and/or the type of intended electrochemical reaction. Thereby, the electrosynthesis of the reactant takes place when contacting the first and second electrodes 108, 110. The reaction mixture and/or its reaction products are discharged from the vessel 102 via the outlet 106 after a predetermined time, for example after a predetermined amount of reaction products are synthesized. Basically, the method may be carried out in a continuous or batch manner.

Hereinafter, a non-limiting more detailed example of an operation of the reactor for electrochemical synthesis is given.

### Example 1

Starting position:
- The electrochemical oxidation of 5-(Hydroxymethyl)furfural (1) to 2,5-furanedicarboxylic acid (2) can be achieved in an aqueous electrolyte at basic pH.
- The synthesis follows a published protocol and is best carried out on Ni-oxide-hydroxide (NiOOH) catalytic anodes.
- Due to the oxidation directly on the electrode surface, the overall active surface area of the catalytic anode plays a crucial role for achievable space-time-yields. 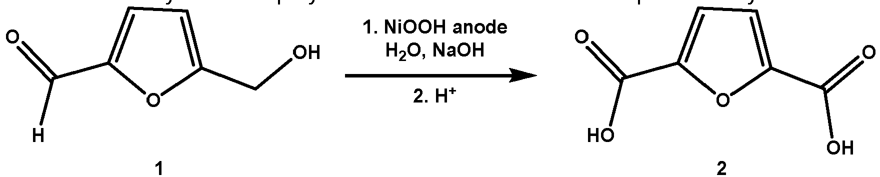
- The reaction yield and stability of pre-formed catalytic NiOOH surfaces is best on high surface area nickel electrodes like Ni-foam or Ni-net.
- Construction of flow-through continuous electrochemical cells with significant production capacities, utilizing these porous materials would require multi-stacking of thin Ni-foam or Ni-net, since only low penetration depths of the electric field are possible for thick porous electrodes. These stacking procedures result in complex electric contacting requirements and physical stabilization efforts to eliminate short circuits.

Application of the reactor 100 according to the present invention:
Metal printing of 3D interpenetrating electrodes as described above can be used to overcome these limitations.
- Interpenetrating structures can be printed via Selective Laser Melting of stainless steel in a 3D printer.
- The structural motif comprises of one regularly shaped grid electrode, which is interpenetrated regularly by a second non-touching electrode of any shape. Used design motif is depicted in Figures 1 and 2.
- The stainless-steel grid is pretreated with aqueous HCI for surface cleaning and subsequently exposed to an electroless Ni plating solution to obtain a smooth uniform Ni surface. (as described in Nickel Plating on Steel by Chemical Reduction", Abner Brenner and Grace E. Riddell published in Part of Journal of Research of the National Bureau of Standards, Research Paper RP 1725, Volume 37, July 1946)
- Direct utilization of the stainless-steel electrode is also possible but requires repetitive use under the following reaction conditions to show similar performance to Ni plated electrodes.
- The obtained Ni electrode is activated in the literature known procedure for NiOOH formation on Ni electrodes.
- The activated electrode can be directly used in flow through cell systems.
- 3D printing of the interpenetrated structure allows occupation of the full cell volume with electrocatalytic NiOOH.
- The regularly interpenetrated structure ensures a constant electric field and therefore constant catalytic activity throughout the entire cell volume.

### General experimental procedure:

The 3D printed structures were subjected to electroless Ni plating. For this purpose the electrode was subjected to aqueous HCI (15% aq.) for 5 minutes and exposed to a electroless Ni plating solution according to the literature described in "Nickel Plating on Steel by Chemical Reduction, Abner Brenner and Grace E. Riddell" published in Part of Journal of Research of the National Bureau of Standards, Research Paper RP 1725, Volume 37, July 1946. The Ni plated electrode was activated to NiOOH surface by a standard procedure as disclosed in "Oxidation of alcohols by electrochemically regenerated nickel oxide hydroxide. Selective oxidation of hydroxysteroids" Johann Kaulen and Hans-J. Schafer published in Tetrahedron Vol. 38 No. 22. pp. 3299 to 3308, 1982 to obtain a catalytically active surface.

### Preparation of main electrolyte:

A buffer solution containing K₂HPO₄ (34.84 g, 0.2 mol) in 400 mL water was adjusted to pH 12 by addition of 30% aqueous KOH and finally diluted to a total volume of 500 mL.

### Procedure for electrochemical conversion:

HMF (1.11 g, 8.8 mmol) was dissolved in 110 g of the main electrolyte buffer solution to give the final reaction mixture. The electrochemical cell, containing the 3D printed electrodes, was filled with this solution and a current of 400 mA was applied until 10-12 F passed the solution. The reaction was carried out at room temperature. The electrolyte was circulated with a speed of 1.2 L/min. After the electrolysis was finished, the resulting solution was cooled below 9 °C and acidified to pH 0.3 with aqueous HCI, keeping the temperature at 9 °C or below. Resulting precipitate was stirred for 10 minutes. The solid was filtered and washed with cold water (2 times, 15 mL). The solid was again suspended in 15 mL water, cooled below 9 °C and further acidified to pH 0 by aqueous HCI and stirred for 10 minutes to obtain high purity product. The resulting precipitate was again filtered and washed two times with 15 mL water. The solid was dried at 80 °C to obtain pure 2,5-furanedicarboxylic acid.

### Cited literature:

- "Nickel Plating on Steel by Chemical Reduction", Abner Brenner and Grace E. Riddel" published in Part of Journal of Research of the National Bureau of Standards, Research Paper RP 1725, Volume 37, July 1946
- "Oxidation of alcohols by electrochemically regenerated nickel oxide hydroxide. Selective oxidation of hydroxysteroids" Johann Kaulen and Hans-J. Schafer published in Tetrahedron Vol. 38 No. 22. pp. 3299 to 3308, 1982

### List of reference numbers

- 100: reactor
- 102: vessel
- 104: inlet
- 106: outlet
- 108: first electrode
- 110: second electrode
- 111: support
- 112: first electrode portion
- 114: second electrode portion
- 116: outer surface layer
- 118: outer surface layer
- 120: length
- 122: length
- 124: length
- 126: width
- 128: width
- 130: width
- 132: pump
- 134: power source
- 136: connection point
- 138: connection point

## Claims

1. Reactor (100) for electrochemical synthesis, comprising
a vessel (102) configured to receive a reaction mixture comprising an electrolytic medium and at least one reactant,
at least a first electrode (108), and
at least a second electrode (110),
wherein the first electrode (108) and the second electrode (110) are arranged within the vessel (102) and interpenetrate one another, particularly without electrical contact.

2. Reactor (100) according to any preceding claim, wherein the first electrode (108) and the second electrode (110) are arranged so as to allow and/or purposefully direct a flow of the reaction mixture therebetween.

3. Reactor (100) according to any preceding claim, wherein the first electrode (108) and the second electrode (110) have an identical or different shape.

4. Reactor (100) according to any preceding claim, wherein the first electrode (108) and/or the second electrode (110) are shaped in a regular or irregular pattern.

5. Reactor (100) according to any preceding claim, wherein the first electrode (108) and/or the second electrode (110) are two dimensionally or three dimensionally grid-shaped.

6. Reactor (100) according to any preceding claim, wherein the first electrode (108) and/or the second electrode (110) are honeycomb-shaped.

7. Reactor (100) according to any preceding claim, wherein the first electrode (108) or the second electrode (110) is comb-shaped.

8. Reactor (100) according to any preceding claim, wherein the first electrode (108) and the second electrode (110) are made by an additive manufacturing method, particularly 3D-printing.

9. Reactor (100) according to any preceding claim, wherein the first electrode (108) and the second electrode (110) are made at least partially of a material comprising metal, particularly at least one metal selected from the group consisting of Pt, Ta, Ni, Au, Fe, Ag, Al, Ti, Cu, any mixture and oxides thereof, or wherein the first electrode (108) and the second electrode (110) are made at least partially of a material comprising plastics and/or polymer.

10. Reactor (100) according to any preceding claim, wherein at least an outer surface layer (116, 118) of the first electrode (108) and/or the second electrode (110) comprises a material comprising at least one element selected from the group consisting of Pt, Pd, Ru, Ir, Ta, Ni, Ni-oxides, Au, Fe, Cr, Ag, Al, Ti, Mg, Mo, W, Cu, Sn , Zn, Cd, Pb, Pb-oxides, carbon allotropes, gas diffusion layers, any mixture and oxides thereof.

11. Reactor (100) according to any preceding claim, wherein the vessel (102) comprises a predetermined length (120), wherein the first electrode (108) and the second electrode (110) each comprise a length (122, 124) being in a range of 50 % to 99% of the length (120) of the vessel (102).

12. Reactor (100) according to any preceding claim, wherein the vessel (102) comprises a predetermined width (126), wherein the first electrode (108) and the second electrode (110) each comprise a width (128, 130) being in a range of 50 % to 99% of the width (126) of the vessel (102).

13. Reactor (100) according to any preceding claim, wherein the vessel (102) comprises at least one inlet (104) for supplying the reaction mixture and at least one outlet (106) for discharging the reaction mixture and/or its reaction products.

14. Reactor (100) according to any preceding claim, further comprising a power source (134) configured to apply a voltage or current to the first and second electrodes (110), wherein the first electrode (108) and the second electrode (110) each comprise at least one connection point (136, 138) connected to the power source (134).

15. Method for carrying out an electrochemical synthesis, comprising
- providing a reactor (100) according to any preceding claim,
- supplying a reaction mixture comprising an electrolytic medium and at least one reactant to the vessel (102), and
- applying a predetermined voltage or current to the first electrode (108) and second electrode (110).
